# EUROPÄISCHE PATENTSCHRIFT

(11) **EP 3 123 259 B1**
(45) Veröffentlichungstag und Bekanntmachung des Hinweises auf die Patenterteilung: **30.01.2019**
(21) Anmeldenummer: 14725613.5
(22) Anmeldetag: 26.03.2014
(51) Int. Cl.: G05B 23/02, G06Q 10/00, G01M 13/04

(54) **VERFAHREN UND SYSTEM ZUR FUNKTIONSÜBERWACHUNG EINES GESCHMIERTEN MASCHINENELEMENTS**
METHOD AND SYSTEM FOR MONITORING THE FUNCTION OF A LUBRICATED MACHINE ELEMENT
PROCÉDÉ ET SYSTÈME POUR LA SURVEILLANCE DU FONCTIONNEMENT D'UN ÉLÉMENT LUBRIFIÉ DE MACHINE

(43) Veröffentlichungstag der Anmeldung: 01.02.2017
(73) Patentinhaber: Schaeffler Technologies AG & Co. KG, 91074 Herzogenaurach (DE)
(72) Erfinder: HOLWEGER, Walter, 78736 Epfendorf (DE); WOLF, Marcus, 91097 Oberreichenbach (DE); GOß, Matthias, 91325 Adelsdorf (DE)
(86) Internationale Anmeldenummer: PCT/DE2014/200142
(87) Internationale Veröffentlichungsnummer: WO 2015/144106

(56) Entgegenhaltungen:
- C Walford ET AL: "condition monitoring of wind turbines Technology overview, seeded-fault testing, and cost-benefit analysis", , 6. Dezember 2006 (2006-12-06), XP055021045, Gefunden im Internet: URL:http://www.apere.org/manager/docnum/do c/doc1262_Monitoring.fiche66.pdf [gefunden am 2012-03-06]

## Beschreibung

### Gebiet der Erfindung

Die vorliegende Erfindung betrifft die Überwachung der Funktionsfähigkeit von geschmierten Maschinenelementen, insbesondere betrifft die Erfindung ein Verfahren und System zur Funktionsüberwachung von Lagern in Bezug auf "Weiß Anätzende Risse".

### Hintergrund der Erfindung

Geschmierte Kontakte in technischen Anlagen erleiden durch Werkstoffermüdungen häufig Schäden. Dies kann zum Ausfall der gesamten technischen Anlage führen.

Eine Form der Werkstoffermüdung sind die sogenannten "Weiß Anätzenden Risse" (engl. "White Etching Cracks", im Folgenden mit WEC abgekürzt). Hierbei können im Kontaktbereich von Maschinenelementen, beispielsweise wenn Maschinenelemete übereinander rollen oder gleiten, Risse an- und unterhalb der Materialoberfläche entstehen und sich weiter ausbreiten. Bei Wälzlagern können beispielsweise WEC im Wälzkontakt an oder nahe der Laufbahnoberfläche auftreten und unter Überrollbelastung als teilweise verzweigende Ermüdungsrisse in die Tiefe des Werkstoffs wachsen. In der Praxis hat das Auftreten derartiger WEC dazu geführt, dass große Wälzlager, die beispielsweise bei Windkraftanlagen verbaut werden, in einzelnen Fällen weit vor ihrer statistischen Lebenserwartung versagen. Das spontane und nicht vorhersagbare Auftreten der WEC ist also mit hohen Ausfall- und Reparaturkosten verbunden. WEC sind auch unter dem Begriff "White Structured Flaking" (WSF) bekannt.

Die Ursache des WEC-Schadensmechanismus ist nach heutigem Wissensstand nicht abschließend bekannt. Bekannt sind Werkstofflösungen und -bearbeitungsverfahren, die WEC weitestgehend verhindern. Diese Lösungen sind im Vergleich zu Standardwerkstoffen und -verfahren teuer und werden daher kaum eingesetzt.

In der DE102007055575A1 wird vorgeschlagen, das Auftreten von WEC durch die Erzeugung von Druckeigenspannungen im Bereich der Laufbahnen zu bekämpfen. Derartige Druckeigenspannungen können durch ein materialabtragendes Bearbeitungsverfahren erzeugt werden.

In der EP2123779A1 wird zur Erhöhung der Ermüdungsfestigkeit und zur Verringerung der Gefahr des Auftretens von WEC vorgeschlagen, Laufbahnen und/oder Wälzkörper aus einem gehärteten Stahl mit einem Kohlenstoffanteil zwischen 0,4 und 0,8 Gewichtsprozent herzustellen.

In der EP2573195A1 wird zur Erhöhung der Robustheit gegenüber WEC vorgeschlagen, die Oberfläche eines Wälzkörpers oder einer Laufbahn aus einem modifizierten Werkstoff herzustellen, wobei das Wälzlager für einen bestimmten Zeitraum einer erhöhten Temperatur ausgesetzt wird, während die Lagerfläche in Kontakt mit einem chemischen Additiv ist.

Weiter ist bekannt, dass WEC-bedingte Ermüdungsschäden von geschmierten Maschinenelementen in Verbindung mit dem eingesetzten Schmierstoff stehen. Daher werden beispielsweise in WO2012/022501A1, WO2007/010845A1, EP2022840A2, US2009/0069204A1, WO2005/035702A1 und Ye et. al., Chem. Commun., 2001, 2244-2245, Schmierstofflösungen mit ionischer Flüssigkeit vorgeschlagen.

Die chemische Zusammensetzung des Schmierstoffs ändert sich jedoch im Laufe des Betriebs des geschmierten Maschinenelements. Daher werden in der Praxis üblicherweise Schmierstoffproben entnommen und zur Untersuchung an ein Labor versendet. Basierend auf dem Untersuchungsergebnis wird angezeigt, ob die untersuchte chemische Zusammensetzung des Schmierstoffs bereits kritisch ist. Beim Vorliegen einer kritischen Schmierstoffzusammensetzung besteht eine mögliche Maßnahme darin, das Lager zu spülen und den Schmierstoff zu ersetzen.

Der Prozess der Laboruntersuchung ist langwierig, wodurch unter Umständen nicht schnell genug reagiert werden kann und somit dennoch ein Ermüdungsschaden innerhalb der Untersuchungsintervalle auftreten kann. Weiterhin ist es nicht möglich, eine WEC-Ausfallneigung, also eine Wahrscheinlichkeit für das Auftreten von WEC, zu bestimmen. Eine häufige und regelmäßige Wartung, beispielsweise in Form einer Spülung geschmierter Maschinenelemente führt jedoch unter Umständen ebenfalls zum Betriebsausfall der technischen Anlage und ist damit kostspielig.

### Zusammenfassung der Erfindung

Der Erfindung liegt die Erkenntnis zugrunde, dass bei einem bestimmten Konzentrationsverhältnis des Schmierstoffs geschmierter Maschinenelemete ein Laufzeitminimum bis zu einem WEC-Schadeneintritt zu beobachten ist. Die Schmierstoffzusammensetzung eines im Betrieb befindlichen geschmierten Maschinenelements ändert sich über die Zeit. Durch Zugabe von Schmierstoffadditiven beziehungsweise reaktive Änderung der Schmierstoffzusammensetzung, um das durch die Anlagen- und/oder Schmierstoffhersteller vorgegebene, "WEC-optimale", Konzentrationsverhältnis beizubehalten, kann daher die Betriebslaufzeit eines geschmierten Maschinenelements verbessert werden.

Um eine zeitnahe reaktive Wartung zu ermöglichen, ist es daher erforderlich, ein Verfahren und ein System anzugeben, das eine Überwachung der chemischen Zusammensetzung des Schmierstoffs eines geschmierten Maschinenelements ermöglicht und somit die Funktionsausfallneigung bei einer bestimmten Schmierstoffzusammensetzung zeitnah anzeigen kann. Die Überwachung soll sowohl im Vorfeld einer Inbetriebnahme als auch begleitend im Betrieb über eine Online-Überwachung oder durch Entnahme von Schmierstoffproben im Betrieb erfolgen können.

Dieses technische Problem wird durch die technischen Merkmale der unabhängigen Ansprüche in Form eines zumindest in Teilen computerimplementierten Verfahrens, eines Computerprogrammprodukts, eines Server-Systems sowie eines Systems umfassend ein Client- und Server-System erfindungsgemäß gelöst.

Das erfindungsgemäße Verfahren zur Funktionsüberwachung eines mit einem Schmierstoff geschmierten Maschinenelements umfasst das Empfangen von Messwerten betreffend den Schmierstoff und das Ermitteln einer aktuellen chemischen Zusammensetzung des Schmierstoffs auf Basis der Messwerte.

Das Ermitteln einer chemischen Zusammensetzung von Schmierstoff kann beispielsweise über eine Spektroskopie erfolgen.

Weiterhin umfasst das erfindungsgemäße Verfahren das Vergleichen der aktuellen chemischen Zusammensetzung mit vorab bekannten chemischen Zusammensetzungen, die in einer Datenbank gespeichert sind. In der Datenbank sind die Funktionsausfallneigungs-Werte für den Einsatz von Schmierstoffen mit den vorab bekannten chemischen Zusammensetzungen im Zusammenhang mit Maschinenelementen aus vorab bekannten Werkstoffen gespeichert.

Es können also in der Datenbank Daten über chemische Zusammensetzungen von typischerweise eingesetzten Schmierstoffen für bestimmte geschmierte Maschinenelemente gespeichert sein. Der Einsatz eines bestimmten Schmierstoffs ist zumeist abhängig von der Anwendung, beispielsweise der Anwendung in Windkraftanlagen, und dem vorliegenden Werkstoff. Für solche Anwendungsfälle und Rahmenbedingungen sind oftmals die chemischen Zusammensetzungen des Schmierstoffs von den Anlagen- und/oder Schmierstoffherstellern definiert oder auch in Normen festgehalten, und Laufzeitminima bei Beibehaltung der vorgegebenen chemischen Zusammensetzung sind bekannt. Es liegt somit ein optimaler Funktionsausfallneigungs-Wert vor, der ein WEC Schadensereignis also als unwahrscheinlich kennzeichnet.

Des Weiteren kann die Datenbank empirische Daten über WEC Ermüdungsereignisse von geschmierten Maschinenelementen beinhalten. Für ein solches WEC Ermüdungsereignis ist die zum Ereignis vorliegende chemische Zusammensetzung des verwendeten Schmierstoffs, sowie die Anwendung und/oder der Werkstoff bekannt.

Somit kann eine aktuelle, ermittelte chemische Zusammensetzung eines Schmierstoffs mit den bekannten chemischen Zusammensetzungen in der Datenbank abgeglichen werden. Die Unterschiede zwischen den chemischen Zusammensetzungen der definierten Schmierstoffe und/oder den Herstellerschmierstoffen zu den Schmierstoffen, bei denen nach einer gewissen Betriebslaufzeit das WEC Schadensereignis eingetreten ist, können für die Festlegung von Risikowerten bezüglich eines Funktionsausfalls aufgrund von WEC herangezogen werden.

Das erfindungsgemäße Verfahren umfasst weiter das Identifizieren eines Funktionsausfallneigungs-Wertes auf Basis des Vergleichsschrittes. Der Funktionsausfallneigungs-Wert für das geschmierte Maschinenelement kann auf Basis der festgelegten Risikowerte identifiziert werden, also abhängig davon, wie sich die aktuelle chemische Zusammensetzung mit den bekannten chemischen Zusammensetzungen in der Datenbank gleicht.

Weiterhin umfasst das erfindungsgemäße Verfahren das Ausgeben des Funktionsausfallneigungs-Wertes des geschmierten Maschinenelements. Das Ausgeben kann beispielsweise das Versenden des Funktionsausfallneigungs-Wertes über eine Datenverbindung an den Betreiber der Anlage mit dem geschmierten Maschinenelement sein. Alternativ oder zusätzlich könnte das Anzeigen des Funktionsausfallneigungs-Wertes auf einem Anzeigegerät, wie einem Bildschirm, erfolgen. Wenn der Funktionsausfallneigungs-Wert beispielsweise eine hohe Wahrscheinlichkeit für das Auftreten eines WEC Schadensereignisses aufweist, kann der Betreiber einer Anlage mit dem geschmierten Maschinenelement vorsorglich den Schmierstoff durch neuen Schmierstoff ersetzen. Ein Vorteil hierbei ist, dass der Betreiber mit der aufwandintensiven Spülung warten kann bis der Funktionsausfallneigungs-Wert dies anzeigt. Es ist also möglich, die Anlage möglichst lange im Betrieb zu halten und somit die Gesamtlaufzeit zu optimieren.

In einer weiteren Ausführungsform umfasst das erfindungsgemäßen Verfahrens das Generieren einer zeitlichen Abfolge auf Basis der mehreren identifizierten Funktionsausfallneigungs-Werte. Wenn sich die zeitliche Abfolge einem bestimmten Schwellwert nähert, kann das Ausgeben einer Warnung erfolgen. Eine Ausgabe der Warnung kann beispielsweise analog in der Form geschehen wie bei der Ausgabe des identifizierten Funktionsausfallneigungs-Wertes. Weiter kann das erfindungsgemäße Verfahren das Speichern der mehreren identifizierten Funktionsausfallneigungs-Werte umfassen, auf deren Basis die zeitliche Abfolge generiert wird.

In einer weiteren Ausführungsform ist die Näherung der zeitlichen Abfolge an den bestimmten Schwellwert eine Kennlinie. Eine solche Kennlinie auf Basis der zeitlichen Abfolge der mehreren Funktionsausfallneigungs-Werte kann Anomalien unter den mehreren identifizierten Funktionsausfallneigungs-Werte ausgleichen. Eine solche Anomalie kann beispielsweise vorliegen, wenn die Messwerte zur Identifikation eines Funktionsausfallneigungs-Wertes fehlerhaft oder nicht repräsentativ sind. Messwerte können im Einzelfall nicht repräsentativ sein, da die Schmierstoffzusammensetzung an verschiedenen Stellen des geschmierten Maschinenelements unterschiedlich sein können. Daher ist es möglich, dass die wiederholte Erfassung von Messwerten an beispielsweise derselben Messstelle durch die ständig wechselnde Schmierstoffverteilung des geschmierten Maschinenelements unter Umständen auch lokal beschränkte und im Wesentlichen nicht kritische Schmierstoffzusammensetzungen aufweist.

Das erfindungsgemäße Verfahren umfasst weiter das Erfassen der Messwerte mittels einer an dem geschmierten Maschinenelement angeordneten Messanlage und das Senden der Messwerte über eine Datenverbindung. Dies ermöglicht eine fortlaufende Überwachung des geschmierten Maschinenelements, beispielsweise während des Betriebs, also eine Online-Überwachung.

In einer alternativen Ausführungsform umfasst das erfindungsgemäße Verfahren das Erfassen der Messwerte mittels einer zur Aufnahme von Schmierstoffproben des geschmierten Maschinenelements ausgebildeten Messanlage und das Senden der Messwerte über eine Datenverbindung. Der Betreiber kann also beispielsweise Schmierstoffproben an dem geschmierten Maschinenelement entnehmen und in einer stationären Messanlage vor Ort auswerten.

Sowohl bei der Online-Überwachung als auch bei einer alternativen Entnahme von Schmierstoffproben ist ein gemeinsamer Vorteil, dass Messwerte beispielsweise vor Ort am geschmierten Maschinenelement erfasst werden können und die Daten über eine Datenverbindung an ein örtlich getrenntes Ziel gesendet und dort empfangen werden können. Somit entfällt das händische Versenden von Schmierstoffproben an ein Labor. Anders gesagt, kann die Messwerterfassung vor Ort beim geschmierten Maschinenelement erfolgen, beispielsweise direkt bei Windkraftanlagen in Windparks.

Es versteht sich, dass sowohl bei der Online-Überwachung als auch bei der Auswertung von Schmierstoffproben vor Ort die Messwerterfassung bereits vor Inbetriebnahme einer Anlage mit einem geschmierten Maschinenelement erfolgen kann. Dies könnte beispielsweise vorteilhaft sein, falls eine gebrauchte Anlage mit nicht geeignetem Schmierstoff, wie einem veralteten Schmierstoff, ausgeliefert worden ist.

In einer weiteren Ausführungsform des erfindungsgemäßen Verfahrens umfasst das Erfassen der Messwerte eine Spektroskopie, beispielsweise eine Infrarotspektroskopie oder Röntgenfluoreszenzspektroskopie.

In einer weiteren Ausführungsform umfasst das erfindungsgemäße Verfahren das Berechnen einer Zusammensetzung eines Additivs, um die aktuelle chemische Zusammensetzung des Schmierstoffs des geschmierten Maschinenelements bei Zugabe des Additives so zu verändern, dass der Funktionsausfallneigungs-Wert der geänderten chemischen Zusammensetzung des Schmierstoffs eine geringere Funktionsausfall-Wahrscheinlichkeit angibt. Anders gesagt, kann durch Zugabe des Additivs die aktuelle chemische Zusammensetzung so verändert werden, dass sie sich der ursprünglichen chemischen Zusammensetzung des definierten Schmierstoffs bzw. Herstellerschmierstoffs annähert. Somit kann unter anderem die Betriebslaufzeit der Anlage mit dem geschmierten Maschinenelement verlängert werden, bevor eine Spülung bzw. Wartung mit Stillstandskosten durchgeführt werden sollte.

In einer weiteren Ausführungsform umfasst das erfindungsgemäße Verfahren das Ausgeben der berechneten Zusammensetzung des Additivs. Das Ausgeben kann beispielsweise das Versenden der Daten über die Additiv-Zusammensetzung über eine Datenverbindung an den Schmierstoffhersteller sein. Der Schmierstoffhersteller kann daraufhin ein entsprechendes Additiv zusammenstellen und dieses an den Betreiber der Anlage mit dem geschmierten Maschinenelement senden. Es ist auch denkbar, dass der Betreiber bereits eine Auswahl an Additiven vorrätig hat, von welchen er dann das passende oder am besten geeignete Additiv verwenden kann.

Ein weiterer Aspekt der vorliegenden Erfindung ist ein Computerprogrammprodukt, welches, wenn es in einen Speicher einer Datenverarbeitungsanlage geladen wird und von mindestens einem Prozessor der Datenverarbeitungsanlage ausgeführt wird, die Schritte des computerimplementierten Verfahrens ausführt.

Weitere Aspekte der vorliegenden Erfindung sind ein Client-System zur Erfassung von Messwerten betreffend einen Schmierstoff eines geschmierten Maschinenelements, ein Server-System zur Funktionsüberwachung eines mit einem Schmierstoff geschmierten Maschinenelements und ein System zur Überwachung der Funktionsausfallneigung umfassend ein Client-System und ein Server-System wie zuvor und nachstehend beschrieben. Das System zur Überwachung der Funktionsausfallneigung kann also die Eigenschaften einer Client-Server-Architektur und/oder gleichgestellter Rechner-zu-Rechner-Verbindungen, beispielsweise einer Peer-to-Peer-Architektur, umfassen.

Weitere vorteilhafte Ausführungsformen der vorliegenden Erfindung finden sich in den abhängigen Ansprüchen wieder.

### Kurze Beschreibung der Zeichnungen

Nachfolgend wird ein Ausführungsbeispiel der Erfindung anhand von Figuren dargestellt:
Figur 1 zeigt ein Ausführungsbeispiel des erfindungsgemäßen Systems zur Überwachung der Funktionsausfallneigung eines geschmierten Maschinenelements in einem Anwendungsszenario.
Figur 2 zeigt ein Flussdiagramm zur Veranschaulichung eines erfindungsgemäßen Verfahrens.
Figur 3 zeigt ein einfaches Blockdiagramm des Systems aus Figur 1.
Figur 4 zeigt einen Graphen mit einer zeitlichen Abfolge von Funktionsausfallneigungs-Werten.

Die Figuren zeigen nicht-skalierte Zeichnungen. Die Größenverhältnisse der Piktogramme sind symbolisch zu verstehen und nicht aufeinander abgestimmt.

### Detaillierte Beschreibung der Zeichnungen

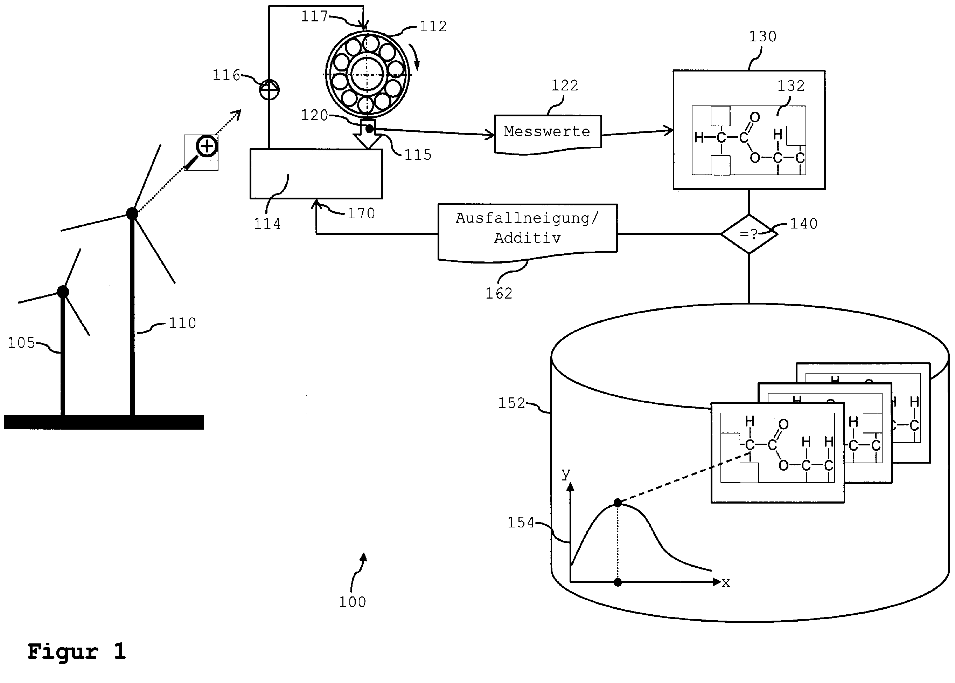

Figur 1 zeigt ein Ausführungsbeispiel des erfindungsgemäßen Systems zur Überwachung der Funktionsausfallneigung eines geschmierten Maschinenelements in einem Anwendungsszenario 100. Im Anwendungsszenario 100 sind Windkraftanlagen 105, 110 symbolisch abgebildet. Windkraftanlagen 105, 110 umfassen großbauende Wälzlager. Ein Wälzlager umfasst beispielsweise einen Innenring, einen Außenring und dazwischenliegende Wälzkörper, wobei die Wälzköper im Wälzkontakt mit den Laufbahnflächen der Ringe stehen. Des Weiteren sind die Kontaktflächen in der Regel mit einem entsprechenden Schmierstoff geschmiert. In Anwendungsszenario 100 ist ein Wälzlager vergrößert dargestellt.

Die folgende Beschreibung der Zeichnungen bezieht sich beim geschmierten Maschinenelement 112 exemplarisch auf ein Wälzlager. Das geschmierte Maschinenelement kann in einem anderen Beispiel auch nur der Innenring sein, der einer Überrollbelastung von Wälzkörpern ausgesetzt ist. Ein erfindungsgemäßes geschmiertes Maschinenelement kann aber auch jede weitere Anordnung sein, bei welcher sich zumindest zwei Maschinenelemente in einem geschmierten Reib- oder Wälzkontakt befinden.

Figur 1 illustriert weiter einen Schmierstoffkreislauf 116. Der Schmierstoffkreislauf 116 umfasst einen Schmierstoffrücklauf 115 und einen Schmierstoffzulauf 117, sowie das Schmierstoffreservoir 114. Der Schmierstoffkreislauf 116 versorgt über den Schmierstoffzulauf 117 und Schmierstoffrücklauf 115 das geschmierte Maschinenelement 112 mit Schmierstoff. Des Weiteren ist am Schmierstoffrücklauf 115 ein Sensor angeordnet, welcher Daten für eine Spektroskopie liefert, beispielsweise für eine Infrarotspektroskopie oder Röntgenfluoreszenzspektroskopie. Die Sensordaten werden von einem Client-System 120 weiter verarbeitet, um konkrete Messwerte 122 zu einem Zeitpunkt t_n über den im Schmierstoffkreislauf 116 vorliegenden Schmierstoff zu erfassen.

Im Folgenden werden Zustände der Schmierstoffzusammensetzung beziehungsweise der chemischen Zusammensetzung des Schmierstoffs zu folgenden Zeitpunkten t unterschieden:
- t_0: optimaler Zustand der Schmierstoffzusammensetzung (beispielsweise zum Auslieferungszustand)
- t_n: aktueller Zustand der Schmierstoffzusammensetzung (beispielsweise während des Betriebs der Anlage)
- t_(n+1): aktueller Zustand der Schmierstoffzusammensetzung nach dem Zeitpunkt t_n (beispielsweise während des Betriebs der Anlage)
- t_Z: Zustände von Schmierstoffzusammensetzungen zu Zeitpunkten aus der Menge Z, zu denen ein WEC Schadensereignis an einem bekannten geschmierten Maschinenelement aufgetreten ist.

Messwerte 122 werden anschließend an ein Server-System 130 übermittelt. Die Übermittlung kann mit einer beliebigen Datenverbindung erfolgen. Das Server-System 130 bestimmt die chemische Zusammensetzung 132 des Schmierstoffs zum Zeitpunkt t_n. Die chemische Zusammensetzung 132 wird dann mit chemischen Zusammensetzungen, die in Datenbank 152 gespeichert sind, verglichen.

Die Datenbank 152 umfasst sowohl Daten über die chemische Zusammensetzung des Schmierstoffs zum Zeitpunkt t_0, als auch chemische Zusammensetzungen des Schmierstoffs zu Zeitpunkten t_Z. Mittels des Vergleichs der chemischen Zusammensetzung 132 zum Zeitpunkt t_n mit den Daten in der Datenbank 152 kann ein Funktionsausfallneigungs-Wert 162 für das geschmierte Maschinenelement 112 bestimmt werden.

Die Bestimmung des Funktionsausfallneigungs-Wertes 162 ist möglich, da die Datenbank 152 die Wahrscheinlichkeitswerte 154 zu den gespeicherten Daten über die chemischen Zusammensetzungen umfasst. Die Wahrscheinlichkeitswerte 154 geben eine Aussage über den Eintritt eines WEC Schadens an, der bei Vorliegen eines bestimmten chemischen Verhältnisses, beispielsweise dem Verhältnis von Phosphor zu Calcium, der chemischen Zusammensetzung 132 gilt. In der Darstellung 154 ist auf der x-Achse das Verhältnis von chemischen Elementen in einer bestimmten chemischen Zusammensetzung abgetragen und auf der y-Achse das zugehörige Ausfallrisiko angegeben. Aus diesen Daten kann somit ein aktueller Funktionsausfallneigungs-Wert 162 bestimmt werden.

Der aktuelle Funktionsausfallneigungs-Wert 162 wird anschließend ausgegeben und beispielsweise dem Betreiber der Windkraftanlagen 105, 110 übermittelt. Wenn der Funktionsausfallneigungs-Wert 162 ein hohes Risiko für den Eintritt eines WEC Schadensereignis anzeigt, kann der Schmierstoffkreislauf gespült 170 werden, um möglichst die optimale Schmierstoffzusammensetzung zum Zeitpunkt t_0 wiederherzustellen. Alternativ kann bei Bestimmung des Funktionsausfallneigungs-Wertes die Zusammensetzung eines Additivs 162 berechnet werden, das die chemische Zusammensetzung des Schmierstoffs zum Zeitpunkt t_n so verändert, dass ein verbesserter Funktionsausfallneigungs-Wert eintritt. Das Additiv 162 kann dem Schmierstoffkreislauf 116 zugegeben 170 werden.

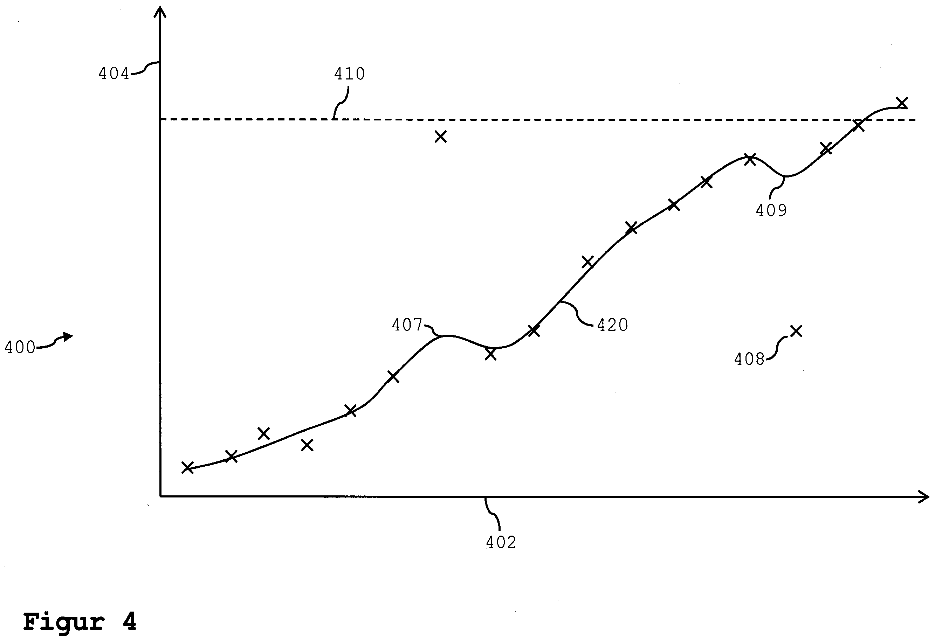

Erfindungsgemäß kann die Bestimmung des Funktionsausfallneigungs-Wertes 162 zur Überwachung des geschmierten Maschinenelements 112 zu späteren Zeitpunkten t_(n+1) fortlaufenden durchgeführt werden. In einem solchen Fall kann eine zeitliche Abfolge erstellt werden. Ein Beispiel wird in Figur 4 beschrieben.

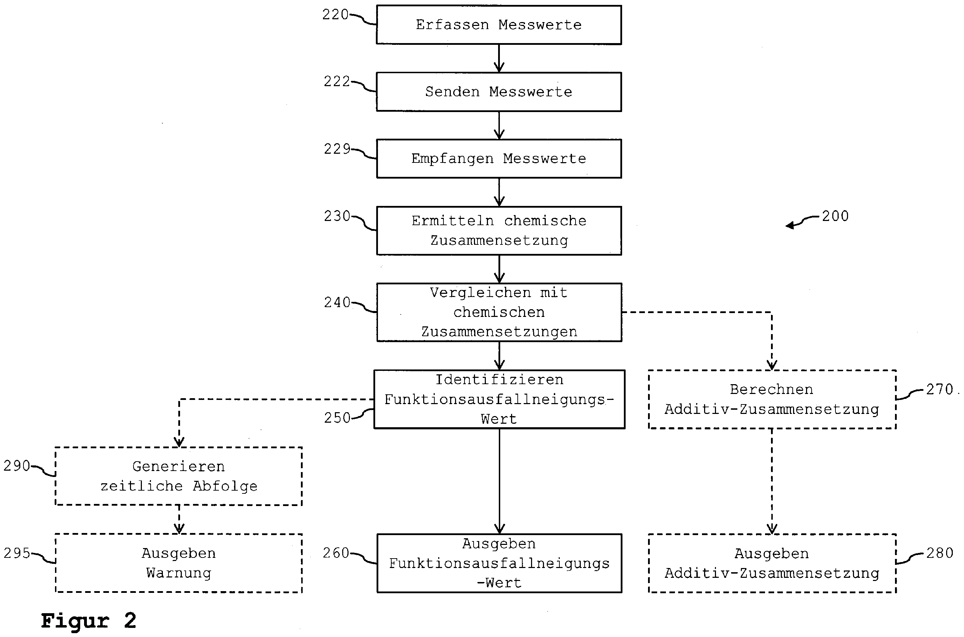

Figur 2 zeigt ein Flussdiagramm zur Veranschaulichung eines erfindungsgemäßen zumindest teilweisen computerimplementierten Verfahrens 200. Gestrichelt dargestellte Schritte sind optional.

Das Verfahren 200 umfasst das Erfassen 220 von Messwerten auf Basis von Sensordaten. Die Sensordaten betreffen einen Schmierstoff, der zur Schmierung eines Maschinenelements eingesetzt wird. Weiter umfasst Verfahren 200 das Senden 222 und das Empfangen 229 der Messwerte. Anschließend wird die chemische Zusammensetzung des Schmierstoffs auf Basis der Messwerte ermittelt 230 und mit chemischen Zusammensetzungen bekannter anderer Schmierstoffe bzw. desselben Schmierstoffs zu anderen Zeitpunkten verglichen 240. Mit den Daten des Vergleichs 240 wird dann ein Funktionsausfallneigungs-Wert identifiziert 250 und der Funktionsausfallneigungs-Wert ausgegeben 260. Weiterhin wird mit den Daten des Vergleichs eine Zusammensetzung für ein Additiv bestimmt 270, das bei Zugabe zu dem Schmierstoff dessen chemische Zusammensetzung so ändert, dass der Funktionsausfallneigungs-Wert der geänderten chemischen Zusammensetzung des Schmierstoffs eine geringere Ausfallneigungs-Wahrscheinlichkeit und damit eine erhöhte Lebensdauer des geschmierten Maschinenelements angibt. Die so bestimmte Additiv-Zusammensetzung wird anschließend ausgegeben 280. Weiterhin fließt ein identifizierter Funktionsausfallneigungs-Wert in das Generieren 290 einer zeitlichen Abfolge von mehreren Funktionsausfallneigungs-Werten ein. Auf Basis der zeitlichen Abfolge wird, falls sich die zeitliche Abfolge einem Schwellwert nähert, eine Warnung ausgegeben 295.

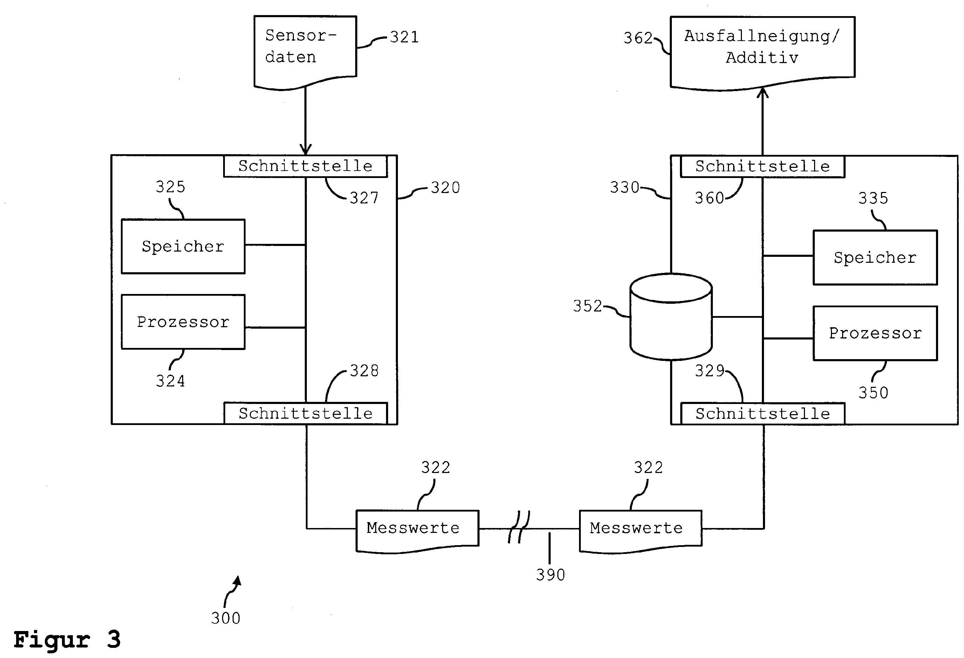

Figur 3 zeigt ein einfaches Blockdiagramm des Systems 300 aus Figur 1. System 300 zur Überwachung der Funktionsausfallneigung eines geschmierten Maschinenelements umfasst ein Client-System 320 und ein Server-System 330, wobei das Client-System 320 und das Server-System 330 über eine Datenverbindung 390 Daten austauschen können.

Das Client-System 320 dient zur Erfassung von Messwerten 322 betreffend einen Schmierstoff eines geschmierten Maschinenelements. Das Client-System 320 umfasst hierbei eine Schnittstellenkomponente 327, die konfiguriert ist für den Empfang von Sensordaten 321. Für die Speicherung und Verarbeitung der Sensordaten 321 sind Datenspeicherkomponente 325 und mindestens eine Prozessorkomponente 324 Teil des Client-System 320. Die Prozessorkomponente 324 ist konfiguriert für die Berechnung der Messwerte 322 aus den Sensordaten. Die berechneten Messwerte 322 werden anschließend über eine zweite Schnittstellenkomponente 328 ausgegeben und über eine Datenverbindung 390 an das Server-System 330 übermittelt. Der Empfang und das Ausgeben von Daten mittels der Schnittstellenkomponenten 327, 328 kann auch über eine einzige Schnittstellenkomponente realisiert werden.

Die Sensordaten 321 werden von einem Sensor, der an dem geschmierten Maschinenelement angeordnet ist, gemessen. Zusätzlich oder alternativ können auch vorher abgenommene Schmierstoffproben des Schmierstoffs des geschmierten Maschinenelements zur Messung der Sensordaten ausgewertet werden.

Das Server-System 330 zur Funktionsüberwachung eines mit einem Schmierstoff geschmierten Maschinenelements umfasst eine erste Schnittstellenkomponente 329, die konfiguriert ist für den Empfang von Messwerten 322 betreffend den Schmierstoff. Weiter umfasst das Server-System 330 eine Datenspeicherkomponente 325 für die Speicherung der Messwerte 322 und mindestens eine Prozessorkomponente 350. Die Prozessorkomponente 350 ist konfiguriert für die Ermittlung einer aktuellen chemischen Zusammensetzung des Schmierstoffs auf Basis der Messwerte 322, und anschließenden einem Vergleich der aktuellen chemischen Zusammensetzung (132) mit vorab bekannten chemischen Zusammensetzungen, die in einer Datenbank 352 gespeichert sind. In der Datenbank 352 sind weiter Funktionsausfallneigungs-Werte für den Einsatz von Schmierstoffen mit den vorab bekannten chemischen Zusammensetzungen im Zusammenhang mit Maschinenelementen aus vorab bekannten Werkstoffen gespeichert. Die Datenbank 352 kann Teil des Server-System 330 sein, oder alternativ auch an einem anderen Ort abgelegt sein und über eine Datenverbindung angesprochen werden; dies ist in Figur 3 mit der Anordnung der Datenbank 352 auf dem Rand des Server-System 330 dargestellt.

Die Prozessorkomponente 350 ist weiter konfiguriert für die Identifikation eines Funktionsausfallneigungs-Wertes 362 auf Basis der ermittelten chemischen Zusammensetzung des Schmierstoffs. Das Server-System 330 umfasst schließlich eine zweite Schnittstellenkomponente 360, die für die Ausgabe des Funktionsausfallneigungs-Wertes 362 des geschmierten Maschinenelements konfiguriert ist. Der Empfang und das Ausgeben von Daten mittels Schnittstellenkomponenten 329, 360 kann auch über eine einzige Schnittstellenkomponente realisiert werden.

Die mindestens eine Prozessorkomponente 350 des Server-System 330 kann weiter für die Generierung einer zeitlichen Abfolge auf Basis mehrerer Funktionsausfallneigungs-Werte konfiguriert sein. Die zweite Schnittstellenkomponente 360 kann weiter für eine weitere Ausgabe einer Warnung, wenn sich die zeitliche Abfolge einem vorab bestimmten Schwellwert nähert, konfiguriert sein.

Die mindestens eine Prozessorkomponente 350 des Server-System 330 kann weiter für die Berechnung einer Kennlinie konfiguriert sein, wobei die weitere Ausgabe einer Warnung auf Basis der Näherung der Kennlinie an den vorab bestimmten Schwellwert erfolgt.

Die mindestens eine Prozessorkomponente 350 des Server-System 330 kann weiter für die Berechnung einer Zusammensetzung eines Additivs konfiguriert sein. Das Additiv kann die aktuelle chemische Zusammensetzung des Schmierstoffs des geschmierten Maschinenelements bei Zugabe zum aktuellen Schmierstoff so verändern, dass der Funktionsausfallneigungs-Wert der geänderten chemischen Zusammensetzung des Schmierstoffs eine geringere Funktionsausfall-Wahrscheinlichkeit angibt.

Weiter kann die zweite Schnittstellenkomponente 360 für die Ausgabe der Daten über die Zusammensetzung des Additivs konfiguriert sein.

Figur 4 zeigt einen Graphen 400 mit einer zeitlichen Abfolge von Funktionsausfallneigungs-Werten. Die x-Achse 402 ist eine Zeitachse. Die Zeitachse kann beispielsweise die Betriebsdauer eines geschmierten Maschinenelements symbolisieren. Die y-Achse 404 zeigt einen Bereich für Funktionsausfallneigungs-Werte. Die mehreren Funktionsausfallneigungs-Werte sind je mit einem Kreuz zu Zeitpunkten t_n dargestellt. Der Schwellwert 410 kann beispielsweise aufgrund von Erfahrungswerten für die Wahrscheinlichkeit für das Eintreten eines WEC Schadenereignisses vorab bekannt sein. Funktionsausfallneigungswerte 406, 408 können beispielsweise aufgrund von Anomalien bei der Erfassung von Messwerten aufgetreten sein. Kennlinie 420 gleicht die Messanomalien aus, wie bei 407, 409 zu erkennen ist. Wenn die Kennlinie 410 den Schwellwert erreicht bzw. sich diesem bis auf eine gewisse Abweichung annähert, wird eine Warnung ausgegeben. Alternativ kann bereits bei der Annäherung des Funktionsausfallneigungs-Wertes 406 eine Warnung ausgegeben werden.

Graph 400 zeigt exemplarisch eine geringe Anzahl von Funktionsausfallneigungs-Werten. Bei einer betriebsbegleitenden Überwachung einer Anlage, beispielsweise mittels Online-Überwachung mit einem Sensor der direkt Sensordaten am Schmierstoffkreislauf fortlaufend erfasst, kann ein Graph aus wesentlich mehr Funktionsausfallneigungs-Werten generiert werden.

Ausführungsformen der Erfindung können in Form von digitalen Schaltkreisen, Computerhardware, Firmware, Software oder in beliebigen Kombinationen davon implementiert werden. Die Erfindung kann weiterhin in Form eines Computerprogrammprodukts, z.B. eines Computerprogramms auf einem physischen Informationsträger (z.B., maschinenlesbares Speichermedium) implementiert werden, um von einer Datenverarbeitungsvorrichtung (z.B., programmierbarer Prozessor, Computer oder kommunikativ gekoppelte Computer) ausgeführt zu werden oder deren Betrieb zu steuern. Ein Computerprogrammprodukt wie beansprucht kann in einer beliebigen Programmiersprache erstellt sein, wobei auch kompilierte oder interpretierte Sprachen eingeschlossen sind. Es kann in beliebiger Form eingesetzt werden, beispielsweise als alleinstehendes Programm, Modul, Komponente, Unterprogramm oder als andere Einheit, die geeignet ist, um in einem Datenverarbeitungssystem benutzt zu werden. Das Computerprogramm kann von einem Computer ausgeführt werden oder aber auch durch mehrere über ein Kommunikationsnetzwerk miteinander verbundene Computer entweder an einem Ort oder über mehrere Orte verteilt. Ein computerimplementiertes Verfahren kann durch das Ausführen entsprechender Computerprogrammprodukte auf entsprechenden Datenverarbeitungsvorrichtungen ausgeführt werden.

Verfahrensschritte gemäß der Erfindung können von einem oder mehreren programmierbaren Prozessoren durch abarbeiten des Computerprogramms ausgeführt werden, um die erfindungsgemäßen Funktionen auszuführen, wobei Eingangsdaten verarbeitet werden und entsprechende Ausgangsdaten dabei erzeugt werden. Die Verfahrensschritte können auch durch spezielle Logikbausteine wie z.B. field programmable gate arrays (FPGA) oder application-specific integrated circuits (ASIC) ausgeführt werden.
Beispiele für Prozessoren, die geeignet zur Ausführung des Computerprogramms sind, beinhalten allgemeine oder spezialisierte Mikroprozessoren und jegliche Ein- oder Mehrprozessorlösung eines beliebigen digitalen Computers. Im allgemeinen erhält eine Prozessor Instruktionen und Daten von einem Read-Only Memory (ROM) oder Random Access Memory (RAM) oder von beiden. Die wesentlichen Elemente eines Computers sind mindestens ein Prozessor und ein oder mehrere Speichermedien, um Daten und Instruktionen zu speichern. Im Allgemeinen ist ein Computer auch mit einem oder mehreren Massenspeichermedien (z.B. magnetische, magneto-optische, optische oder solid state (SSD) Speichermedien) gekoppelt, um davon Daten zu empfangen oder Daten dort abzuspeichern. Solche Speichermedien können auch bei Bedarf (on demand) bereitgestellt werden oder über das Internet erreichbar sein (z.B. Cloud Computing). Geeignete Datenträger zum Abspeichern von Programminstruktionen und Daten umfassen alle Arten von nicht-flüchtigen Speicherelementen wie Halbleiterspeicherelemente (z.B., EPROM, EEPROM), Flash-Memory Vorrichtungen, magnetische oder magneto-optische Speichermedien, CD-ROM, DVD-ROM oder Blue-Ray Disks. Die Prozessor- und Speicherelemente können ergänzt werden durch spezielle Logikbausteine, oder auch Teil dieser sein.
Um die Interaktion mit dem Benutzer zu ermöglichen, kann die Erfindung auf einem Computer implementiert sein, der mindestens eine Ausgabevorrichtung (z.B., LCD Monitor, Lautsprecher, etc.) und mindestens eine Eingabevorrichtung (z.B. Tastatur, Touchscreen, Mikrofon, Zeigevorrichtung wie Maus oder Trackball) umfasst.

Der Erfindung kann auf einer Datenverarbeitungsvorrichtung implementiert werden, die eine Backend-Komponente (z.B. Datenserver) umfasst, oder eine Middleware-Komponente (z.B. Anwendungsserver), oder eine Frontend-Komponente (z.B. Client-Computer mit graphischem Benutzerinterface oder Webbrowser) worüber der Benutzer mit einer Ausführungsform der Erfindung interagieren kann, oder jegliche Kombination von Backend-, Middleware- und Frontendkomponenten.
Clientcomputer können auch mobile Endgeräte sein wie beispielsweise Smartphones, Tablet PCs oder jede beliebige tragbare Computervorrichtung. Die Komponenten des Systems können miteinander kommunikativ gekoppelt sein (z.B. mittels eines Kommunikationsnetz Werks wie Local Area Network LAN oder Wide Area Network WAN, Internet oder drahtlosen LAN oder Telekommunikationsnetzwerken ).
Das Computersystem kann Clients und Server umfassen. Ein Client und ein Server sind im Allgemeinen physisch voneinander entfernt und interagieren über ein Kommunikationsnetzwerk. Die Beziehung zwischen Client und Server entsteht dabei durch Computerprogramme, die auf den jeweiligen Computern ausgeführt werden und die eine Client-Server Beziehung untereinander haben.

## Patentansprüche

1. Verfahren zur Funktionsüberwachung eines mit einem Schmierstoff geschmierten Maschinenelements (112), umfassend folgende Schritte:
*Erfassen* (220) von Messwerten (122, 322) mittels einer an dem geschmierten Maschinenelement (112) angeordneten Messanlage,
*Senden* (222) der Messwerte (122, 322) über eine Datenverbindung (390),
*Empfangen* (229) der Messwerte (122, 322) betreffend den Schmierstoff,
*Ermitteln (230)* einer aktuellen chemischen Zusammensetzung (132) des Schmierstoffs auf Basis der Messwerte (122, 322),
*Vergleichen (140, 240)* der aktuellen chemischen Zusammensetzung (132) mit vorab bekannten chemischen Zusammensetzungen, die in einer Datenbank (152, 352) gespeichert sind,
wobei in der Datenbank (152, 352) Funktionsausfallneigungs-Werte für den Einsatz von Schmierstoffen mit den vorab bekannten chemischen Zusammensetzungen im Zusammenhang mit Maschinenelementen aus vorab bekannten Werkstoffen gespeichert sind,
*Identifizieren (250)* eines Funktionsausfallneigungs-Wertes (162, 362) auf Basis des Vergleichsschrittes (140, 240), und
*Ausgeben* (260) des Funktionsausfallneigungs-Wertes (162, 362).

2. Verfahren nach Anspruch 1, das Verfahren weiter umfassend:
*Generieren* (290) einer zeitlichen Abfolge auf Basis mehrerer identifizierter Funktionsausfallneig ungs-Werte,
wenn sich die zeitliche Abfolge einem vorab bestimmten Schwellwert (410) nähert:
*Ausgeben* (295) einer Warnung.

3. Verfahren nach Anspruch 2, wobei die Näherung der zeitlichen Abfolge an den vorab bestimmten Schwellwert (410) eine Kennlinie (420) ist.

4. Verfahren nach einem der Ansprüche 1 bis 3, wobei das Erfassen der Messwerte (122, 322) eine Spektroskopie, vorzugsweise eine Infrarotspektroskopie oder Röntgenfluoreszenzspektroskopie, umfasst.

5. Computerprogrammprodukt, welches, wenn es in einen Speicher einer Datenverarbeitungsanlage geladen wird und von mindestens einem Prozessor der Datenverarbeitungsanlage ausgeführt wird, die Schritte des computerimplementierten Verfahrens nach einem der Ansprüche 1 bis 4 ausführt.

6. Server-System (130, 330) zur Funktionsüberwachung eines mit einem Schmierstoff geschmierten Maschinenelements (112), umfassend:
*eine erste Schnittstellenkomponente* (329) die konfiguriert ist für den *Empfang* von Messwerten (122, 322) betreffend den Schmierstoff,
*eine Datenspeicherkomponente* (335) die konfiguriert ist für die *Speicherung* der Messwerte (122, 322),
*mindestens eine Prozessorkomponente* (350) die konfiguriert ist für:
*Ermittlung* einer aktuellen chemischen Zusammensetzung (132) des Schmierstoffs auf Basis der Messwerte (122, 322),
*Vergleich* der aktuellen chemischen Zusammensetzung (132) mit vorab bekannten chemischen Zusammensetzungen die in einer Datenbank (152, 352) gespeichert sind,
wobei in der Datenbank (152, 352) Funktionsausfallneigungs-Werte für den Einsatz von Schmierstoffen mit den vorab bekannten chemischen Zusammensetzungen im Zusammenhang mit Maschinenelementen aus
vorab bekannten Werkstoffen gespeichert sind, *Identifikation* eines Funktionsausfallneigungs-Wertes (162, 362) auf Basis des Vergleichs, und
*eine zweite Schnittstellenkomponente* (360) die konfiguriert ist für eine *Ausgabe* des Funktionsausfallneigungs-Wertes (162, 362).

7. Server-System (130, 330) nach Anspruch 6, wobei die *mindestens eine Prozessorkomponente* (350) weiter konfiguriert ist für:
*Generierung* einer zeitlichen Abfolge auf Basis mehrerer identifizierter Funktionsausfallneigungs-Werte, und
wobei die *zweite Schnittstellenkomponente* (360) weiter konfiguriert ist für eine *weitere Ausgabe einer Warnung,* wenn sich die zeitliche Abfolge einem vorab bestimmten Schwellwert (410) nähert.

8. Server-System (130, 330) nach Anspruch 7, wobei die *mindestens eine Prozessorkomponente* (350) weiter konfiguriert ist für:
*Berechnung* einer Kennlinie (420),
und wobei die *weitere Ausgabe einer Warnung* auf Basis der Näherung der Kennlinie an den vorab bestimmten Schwellwert (410) erfolgt.

9. Ein System (300) zur Überwachung der Funktionsausfallneigung eines geschmierten Maschinenelements (112), umfassend:
ein Client-System (120, 320) zur Erfassung von Messwerten (122, 322) betreffend einen Schmierstoff eines geschmierten Maschinenelements (112), das Client-System (120, 320) umfassend:
eine erste *Schnittstellenkomponente* (327) die konfiguriert ist für den *Empfang* von Sensordaten (321) über den Schmierstoff,
eine *Datenspeicherkomponente* (325) die konfiguriert ist für die Speicherung der Sensordaten,
mindestens eine *Prozessorkomponente* (324) die konfiguriert ist für die *Berechnung* der Messwerte (122, 322) aus den Sensordaten, und
eine zweite *Schnittstellenkomponente* (328) die konfiguriert ist für das *Senden* der Messewerte (122, 322) über eine Datenverbindung (390); und das System (300) weiter umfassend:
ein Server-System (130, 330) nach einem der Ansprüche 6 bis 8;
wobei das Client-System (120, 320) und das Server-System (130, 330) über eine Datenverbindung (390) für eine Datenkommunikation verbunden sind.

## Claims

1. Method- for monitoring the function of a machine element (112) lubricated with a lubricant, comprising the following steps of:
*capturing* (220) measured values (122, 322) using a measuring system arranged on the lubricated machine element (112),
*transmitting* (222) the measured values (122, 322) via a data connection (390),
*receiving* (229) the measured values (122, 322) relating to the lubricant,
*determining* (230) a current chemical composition (132) of the lubricant based on the measured values (122, 322),
*comparing* (140, 240) the current chemical composition (132) with previously known chemical compositions stored in a database (152, 352),
wherein the database (152, 352) stores functional failure tendency values for the use of lubricants having the previously known chemical compositions in connection with machine elements made of previously known materials,
*identifying* (250) a functional failure tendency value (162, 362) based on the comparison step (140, 240), and
*outputting* (260) the functional failure tendency value (162, 362).

2. Method according to Claim 1, the method also comprising:
*generating* (290) a temporal sequence based on a plurality of identified functional failure tendency values,
if the temporal sequence approaches a previously determined threshold value (410):
*outputting* (295) a warning.

3. Method according to Claim 2, wherein the approach of the temporal sequence to the previously determined threshold value (410) is a characteristic curve (420).

4. Method according to one of Claims 1 to 3, wherein the capture of the measured values (122, 322) comprises spectroscopy, preferably infrared spectroscopy or x-ray fluorescence spectroscopy.

5. Computer program product which, when it is loaded into a memory of a data processing system and is executed by at least one processor of the data processing system, carries out the steps of the computer-implemented method according to one of Claims 1 to 4.

6. Server system (130, 330) for monitoring the function of a machine element (112) lubricated with a lubricant, comprising:
a *first interface component* (329) which is configured to *receive* measured values (122, 322) relating to the lubricant,
*a* data storage *component* (335) which is configured to *store* the measured values (122, 322),
at *least one processor component* (350) which is configured to:
*determine* the current chemical composition (132) of the lubricant based on the measured values (122, 322),
*compare* the current chemical composition (132) with previously known, chemical compositions stored in a database (152, 352),
wherein the database (152, 352) stores functional failure tendency values for the use of lubricants having the previously known chemical compositions in connection with machine elements made of previously known materials,
*identify* a functional failure tendency value (162, 362) based on the comparison, and
*a second interface component* (360) which is configured to *output* the functional failure tendency value (162, 362).

7. Server system (130, 330) according to Claim 6, wherein the *at least one processor component* (350) is also configured to:
*generate* a temporal sequence based on a plurality of identified functional failure tendency values, and
wherein the *second interface component* (360) is also configured to *further output a warning* if the temporal sequence approaches a previously determined threshold value (410).

8. Server system (130, 330), according to Claim 7, wherein the at *least one processor component* (350) is also configured to:
*calculate* a characteristic curve (420),
and wherein the *further output of a warning* is carried out based on the approach of the characteristic curve to the previously determined threshold value (410).

9. System (300) for monitoring the functional failure tendency of a lubricated machine element (112), comprising:
a client system (120, 320) for capturing measured values (122, 322) relating to a lubricant of a lubricated machine element (112), the client system (120, 320) comprising:
a first *interface component* (327) which is configured to *receive* sensor data (321) relating to the lubricant,
a *data storage component* (325) which is configured to store the sensor data,
at least one *processor component* (324) which is configured to *calculate* the measured values (122, 322) from the sensor data, and
a second *interface component* (328) which, is configured to *transmit* the measured values (122, 322) via a data connection (390);
and the system (300) also comprising:
a server system (130, 330) according to one of Claims 6 to 8;
wherein the client system (120, 320) and the server system (130, 330) are connected via a data connection (390) for data communication.

## Revendications

1. Procédé pour la surveillance du fonctionnement d'un élément de machine (112) lubrifié à l'aide d'un lubrifiant, comprenant les étapes suivantes :
la détection (220) de valeurs de mesure (122, 322) au moyen d'un système de mesure disposé sur l'élément de machine lubrifié (112),
la transmission (222) des valeurs de mesure (122, 322) par l'intermédiaire d'une liaison de données (390),
la réception (229) des valeurs de mesure (122, 322) concernant le lubrifiant,
la détermination (230) d'une composition chimique actuelle (132) du lubrifiant sur la base des valeurs de mesure (122, 322),
la comparaison (140, 240) de la composition chimique actuelle (132) à des compositions chimiques précédemment connues qui sont stockées dans une base de données (152, 352),
dans lequel des valeurs de tendance à la défaillance de fonctionnement pour l'utilisation de lubrifiants présentant les compositions chimiques précédemment connues en association avec des éléments de machine en matériaux précédemment connus sont stockées dans la base de données (152, 352),
l'identification (250) d'une valeur de tendance à la défaillance de fonctionnement (162, 362) sur la base de ladite étape de comparaison (140, 240), et
l'émission (260) de la valeur de tendance à la défaillance de fonctionnement (162, 362).

2. Procédé selon la revendication 1, le procédé comprenant en outre :
la génération (290) d'une séquence temporelle sur la base de plusieurs valeurs de tendance à la défaillance de fonctionnement identifiées,
lorsque la séquence temporelle s'approche d'une valeur de seuil prédéterminée (410) :
l'émission (295) d'un avertissement.

3. Procédé selon la revendication 2, dans lequel le rapprochement de la séquence temporelle de la valeur de seuil (410) précédemment déterminée est une courbe caractéristique (420).

4. Procédé selon l'une quelconque des revendications 1 à 3, dans lequel l'acquisition des valeurs de mesure (122, 322) comprend une spectroscopie, de préférence une spectroscopie par infrarouge ou une spectroscopie par fluorescence de rayons X.

5. Programme d'ordinateur qui, lorsqu'il est chargé dans une mémoire d'un système de traitement de données et exécuté par au moins un processeur du système de traitement de données, exécute les étapes du procédé mis en oeuvre par ordinateur selon l'une quelconque des revendications 1 à 4.

6. Système serveur (130, 330) pour la surveillance du fonctionnement d'un élément de machine (112) lubrifié à l'aide d'un lubrifiant, comprenant :
un premier composant d'interface (329) configuré pour la réception de valeurs de mesure (122, 322) concernant le lubrifiant,
un composant de stockage de données (335) configuré pour le stockage des valeurs de mesure (122, 322),
au moins un composant processeur (350) configuré pour :
la détermination d'une composition chimique actuelle (132) du lubrifiant sur la base des valeurs de mesure (122, 322),
la comparaison de la composition chimique actuelle (132) à des compositions chimiques précédemment connues qui sont stockées dans une base de données (152, 352),
dans lequel des valeurs de tendance à la défaillance de fonctionnement pour l'utilisation de lubrifiants présentant les compositions chimiques précédemment connues en association avec des éléments de machine en matériaux précédemment connus sont stockées dans la base de données (152, 352),
l'identification d'une valeur de tendance à la défaillance de fonctionnement (162, 362) sur la base de la comparaison, et
un second composant d'interface (360) configuré pour l'émission de la valeur de tendance à la défaillance de fonctionnement (162, 362).

7. Système serveur (130, 330) selon la revendication 6, dans lequel ledit au moins un composant processeur (350) est en outre configuré pour :
la génération d'une séquence temporelle sur la base de plusieurs valeurs de tendance à la défaillance de fonctionnement identifiées, et
dans lequel le second composant d'interface (360) est en outre configuré pour l'émission supplémentaire d'un avertissement lorsque la séquence temporelle s'approche d'une valeur de seuil prédéterminée (410).

8. Système serveur (130, 330) selon la revendication 7, dans lequel ledit au moins un composant processeur (350) est en outre configuré pour :
le calcul d'une courbe caractéristique (420),
et dans lequel l'émission supplémentaire d'un avertissement est effectuée sur la base du fait que la courbe caractéristique se rapproche de la valeur de seuil (410) précédemment déterminée.

9. Système (300) pour la surveillance de la tendance à la défaillance d'un élément de machine lubrifié (112), comprenant :
un système client (120, 320) pour l'acquisition de valeurs de mesure (122, 322) concernant un lubrifiant d'un élément machine lubrifié (112), le système client (120, 320) comprenant :
un premier composant d'interface. (327) configuré pour la réception de données de capteur (321) concernant le lubrifiant,
un composant de stockage de données (325) configuré pour le stockage des données de capteur,
au moins un composant processeur (324) configuré pour le calcul des valeurs de mesure (122, 322) à partir des données de capteur, et
un second composant d'interface (328) configuré pour la transmission des valeurs de mesuré (122, 322) par l'intermédiaire d'une liaison de données (390) ;
et le système (300) comprenant en outre :
un système serveur (130, 330) selon l'une quelconque des revendications 6 à 8 ;
dans lequel le système client (120, 320) et le système serveur (130, 330) sont reliés par l'intermédiaire d'une liaison de données (390) pour la communication de données.
